# EUROPEAN PATENT APPLICATION

(11) **EP 4 694 034 A1**
(43) Date of publication of application: **11.02.2026**
(21) Application number: 24784344.4
(22) Date of filing: 03.04.2024
(51) Int. Cl.: H04L 9/40

(54) **DIGITAL-KEY SHARING METHOD, DIGITAL-KEY VERIFICATION METHOD, AND COMPUTING DEVICE**

(30) Priority: 07.04.2023 CN 202310371145
(71) Applicant: Boe Technology Group Co., Ltd., Beijing 100015 (CN); Beijing BOE Technology Development Co., Ltd., Beijing 100176 (CN)
(72) Inventor: SU, Jing, Beijing 100176 (CN); ZHAO, Junjie, Beijing 100176 (CN); CHEN, Shaobei, Beijing 100176 (CN); FENG, Hongbo, Beijing 100176 (CN)
(74) Representative: Brötz, Helmut
(86) International application number: PCT/CN2024/085798
(87) International publication number: WO 2024/208262

(57) **Abstract**

Provided are a digital-key sharing method, a digital-key verification method, and a computing device. The digital-key sharing method is executed by a first device and comprises: sending to a second device a digital-key creation request that comprises valid spatial information for a digital key, so as to generate the digital key at the second device; receiving a digital-key signature request from the second device, wherein the digital-key signature request comprises data to be signed of the digital key, and said data comprises the valid spatial information; and on the basis that the signing of the digital-key signature request is completed, sending a digital-key import request to the second device, so as to indicate the second device to store the generated digital key. Therefore, the security of a digital key can be improved in a spatial dimension.

## Description

### TECHNICAL FIELD

The present disclosure relates to the field of the Internet of Things, and more specifically, to a digital key sharing method, a method for authenticating a shared digital key, and a computing device.

### BACKGROUND

With the rapid development of network technology, digital keys are becoming popular. For example, digital keys are widely used in vehicles, company access control, home door locks, safes, bicycles and other scenarios.

As an exemplary application, digital keys are a new product of improvements in automobile technology, allowing vehicle owners to use mobile terminals, electronic bracelets, electronic watches and other devices as vehicle keys to achieve operations such as unlocking a vehicle, starting to drive, and controlling temperature inside the vehicle, without a physical key.

In many scenarios, it may be necessary to share a digital key from a first device to a second device so that the second device can be authorized to use the digital key to control a vehicle. For example, when the vehicle needs to be repaired, the owner of the vehicle needs to share the digital key with a repair/maintenance person. At this time, the device (such as a mobile terminal) owned by the owner of the vehicle needs to share the digital key with the device owned by the repair/maintenance person, so that the repair/maintenance person can use the shared digital key to control the vehicle.

On the other hand, security and convenience are important aspects in the digital key sharing process. Therefore, there is a need for a solution for digital key sharing and a solution for authenticating the shared digital key that can satisfy the requirements of security and convenience.

### SUMMARY

According to an aspect of the present disclosure, there is provided a digital key sharing method, performed by a first device, the method comprising: sending, to a second device, a digital key creation request including valid space information for a digital key for generating the digital key at the second device; receiving a digital key signature request from a second device, wherein the digital key signature request includes to-be-signed data of the digital key, and the to-be-signed data includes the valid space information; and sending, based on completing signing of the digital key signature request, a digital key import request to the second device to indicate the second device to save the generated digital key.

According to another aspect of the present disclosure, there is provided a digital key sharing method performed by a second device, the method comprising: receiving a digital key creation request from a first device, the digital key creation request including valid space information for a digital key, wherein the valid space information is included in validity configuration information sent from the first device to the second device; generating the digital key based on the valid space information, wherein the digital key includes the valid space information; sending a digital key signature request including to-be-signed data of the digital key to the first device, wherein the to-be-signed data includes the valid space information; and saving the generated digital key based on a digital key import request received from the first device.

According to yet another aspect of the present disclosure, there is provided a method for authenticating a shared digital key performed by a target object, the method comprising: receiving a key authentication request from a device providing a digital key, the key authentication request including a certificate of the digital key and valid space information of the digital key; authenticating the certificate of the digital key; and determining whether a space requirement corresponding to the valid space information is satisfied based on a usage location of the digital key.

According to yet another aspect of the present disclosure, there is provided a digital key sharing method from a first device to a second device performed by a server, the method comprising: receiving, from the first device, a digital key creation request including location information of the first device for determining valid space information of a digital key or including the valid space information; generating, based on the valid space information, configuration information for generating the digital key at the second device; and sending the configuration information to the second device for the second device to generate the digital key, wherein the digital key includes the valid space information.

According to yet another aspect of the present disclosure, a computing device is provided, including: a processor; and a memory having stored thereon computer-readable instructions that, when executed, cause the processor to perform a method as described above.

According to another aspect of the present disclosure, a computer-readable storage medium is also provided, which stores a computer program that, when executed by a processor, causes the processor to execute each step of the method as described above.

According to yet another aspect of the present disclosure, a computer program product is also provided, including a computer program that, when executed by a processor, causes the processor to execute each step of the method as described above.

In the embodiments of the present disclosure, it is proposed for the first time that through simultaneously limiting the usage range of the digital key from a spatial dimension, the security of the digital key can be improved from the spatial dimension. In addition, combined with a temporal dimension, the security can be further improved. In addition, by setting different ranges of valid space and/or different durations of lifetime, the digital key can be avoided from being shared multiple times, improving convenience, thereby improving user experience.

### BRIEF DESCRIPTION OF DRAWINGS

In order to explain the embodiments of the present disclosure or the technical solutions in the prior art more clearly, the drawings needed to be used in the description of the embodiments of the present disclosure or the prior art will be briefly introduced below. Obviously, the drawings in the following description are only some embodiments described in present disclosure. For those of ordinary skill in the art, other drawings can also be obtained based on these drawings of the embodiments of the present disclosure.
FIG. 1 shows a system schematic diagram of sharing a digital key between a first device and a second device according to embodiments of the present disclosure.
FIG. 2 shows a schematic diagram of a data structure of a digital key.
FIG. 3 shows an interface schematic diagram of an application program of a digital key sharing process between the first device and the second device according to embodiments of the present disclosure.
FIG. 4 shows a schematic diagram of an application scenario for determining whether the digital key can be used to control a vehicle based on a valid space.
FIG. 5 shows a schematic flowchart of a digital key sharing method according to embodiments of the present disclosure.
FIG. 6A to FIG. 6B each show a schematic flowchart of a digital key sharing method according to embodiments of the present disclosure.
FIG. 7A to FIG. 7C show examples of a relationship of usage time and usage space of the digital key to valid lifetime and the valid space, respectively.
FIG. 8 shows a schematic flowchart of a method for authenticating a shared digital key according to embodiments of the present disclosure.
FIG. 9 exemplarily describes a schematic diagram of processes of the digital key sharing method, which shows an interaction between the first device, the second device and a target object.
FIG. 10 shows a structural block diagram of a digital key sharing apparatus according to embodiments of the present disclosure.
FIG. 11 shows a structural block diagram of a digital key sharing apparatus according to embodiments of the present disclosure.
FIG. 12 shows a structural block diagram of a vehicle according to embodiments of the present disclosure.
FIG. 13 shows a structural block diagram of a server according to embodiments of the present disclosure.
FIG. 14 shows a schematic block diagram of a computing device according to embodiments of the present disclosure.

### DETAILED DESCRIPTION

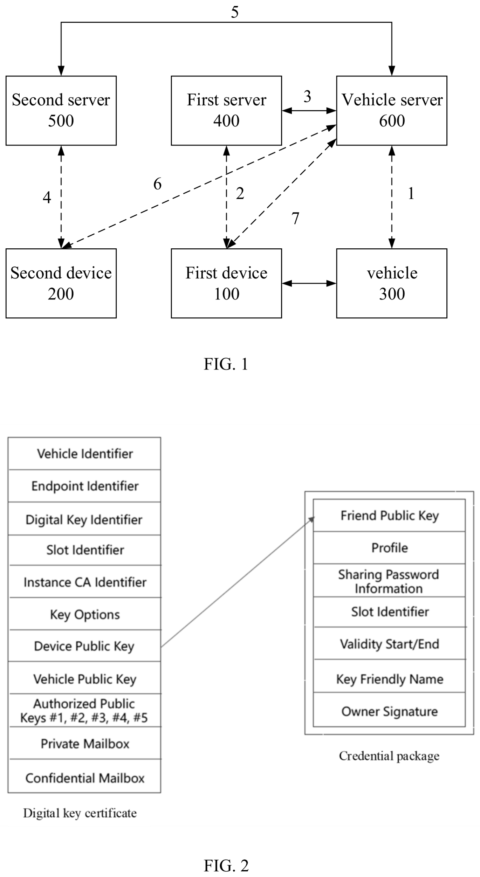

The technical solutions in the embodiments of the present disclosure will be clearly and completely described below with reference to the drawings in the embodiments of the present disclosure. Obviously, the described embodiments are only some of the embodiments of the present disclosure, not all of the embodiments. Based on the embodiments in present disclosure, all other embodiments obtained by those of ordinary skill in the art without inventive efforts fall within the protection scope of the present disclosure. FIG. 1 shows a system schematic diagram for sharing a digital key between a first device and a second device according to embodiments of the present disclosure.

As shown in FIG. 1, the system includes a first device 100, a second device 200, a vehicle 300 (as a specific example of a target object to be controlled by the digital key), a first server 400 for the first device 100 and a second server 500 for the second device 200 and a vehicle server 600 for the vehicle 300. The first device 100 and the second device 200 may communicate point-to-point directly or via servers.

For example, as shown in FIG. 1, the communication of the first device with the second device may be via: path 2 between the first device and the first server, paths (3, 5) between the first server and the second server, and path 4 between the second server and the second device, for example, the digital key can be shared with the second device, the second device can be provided with configuration information that can be set at the first device (validity configuration information as described below), and so on. The first device communicates with the first server 400 via path 2, and the second device communicates with the second server via path 4. The first device/second device may also communicate directly with the vehicle server via path 6/path 7, or may communicate indirectly with the vehicle server via path 2/path 3 and path 4/path 5 through respective servers respectively. The first server 400 and the second server 500 are each responsible for managing the life cycle of the digital key (the cycle of data), and updating, deleting, suspending, and restoring the certificate in the first device/the second device through path 2/path 4, respectively. Servers 400 and 500 can provide and update necessary certificates, load and install digital key instances, and allow digital keys to be disabled and deleted. The vehicle server 600 can create pairing passwords, sign public keys, provide certificates to devices, manage keys, provide the sharer with necessary authentication data, issue legitimate sharer digital key structures, etc. That is to say, the first server, the second server and the vehicle server cooperate to jointly realize the digital key sharing operation from the first device to the second device.

The first device 100 and the second device 200 can each be various types of mobile electronic devices capable of data processing and sending and receiving, such as mobile phones, tablet computers, smart watches, smart bracelets, smart glasses and other devices, and application programs can be installed on them, so that they can interact with the servers through the application programs.

Server 400 or 500 or 600 includes, but is not limited to, implementations such as a network host, a single network server, a collection of multiple network servers, or a collection of cloud computing-based computers. Here, the cloud is composed of a large number of hosts or network servers based on cloud computing, where cloud computing is a type of distributed computing, consisting of a group of loosely coupled computers.

In present disclosure, the server (one or more of the first server 400, the second server 500 or the vehicle server, herein collectively referred to as the server) may be used to generate configuration information of the digital key, and send the configuration information of the digital key to a corresponding device for generating the digital key. Optionally, the server may also generate the configuration information in response to a digital key creation request sent by a device, generate a corresponding digital key based on the configuration information, and then send the generated digital key to a corresponding device.

Optionally, when the first device and the second device share the digital key through the same application program, the first server 400 and the second server 500 may be the same one server, and when the first device and the second device share the data key through different application programs, the first server 400 and the second server 500 may be different servers with communication links.

For example, the first device can send a digital key creation request to the server through a application program, and the digital key creation request can include the identification information of the first device and the identification information of the vehicle, so that after receiving the information, the server performs processing such as identity authentication verification, and generates configuration information and send it to the first device. The first device may generate a digital key for controlling (e.g., unlocking) the vehicle based on the configuration information, where the digital key may be constituted by a data structure.

When the first device needs to unlock the vehicle (smart vehicle), the first device sends the generated digital key-related information to the vehicle. After receiving the digital key-related information from the first device, the vehicle verifies the digital key-related information, and unlock after the verification passes.

In the event that the second device needs to obtain the digital key shared by the first device, the second device can receive configuration information (from the server or from the first device) so that a second digital key similar to the digital key of the first device (the first digital key) can be generated at the second device. The specific process will be described later.

Further, FIG. 2 shows a schematic diagram of the data structure of the digital key. Optionally, the digital key may be composed of a data structure that includes various information related to the digital key, such as certificate information for authentication, digital key valid lifetime information, signature information, and the like.

For example, the data structure of the digital key generated at the first device (e.g., the vehicle owner's digital key) is the left half part of data structure shown in FIG. 2 (generally considered to be the certificate of the digital key), which does not include information such as valid lifetime, and the data structure of the digital key at the second device (e.g., a friend's digital key) includes two parts of data structures shown in FIG. 2, that is, the right half part of data structure in FIG. 2 is an additional part unique to the digital key at the second device, and the Friend Public Key field and the Device Public Key field include the same content for associating the two parts of data structures. The content of the Validity Start/End field indicates the valid start time and end time (i.e., valid lifetime) of the digital key generated at the second device.

That is to say, in the above digital key sharing process, in order to improve security, the validity of the digital key can be considered from the temporal dimension, that is, the digital key at the second device is only allowed to control the target object (such as a vehicle) within the valid lifetime. If it is determined that the usage time of the digital key at the target object is not within the valid lifetime, the target object rejects to be controlled by the digital key at the second device.

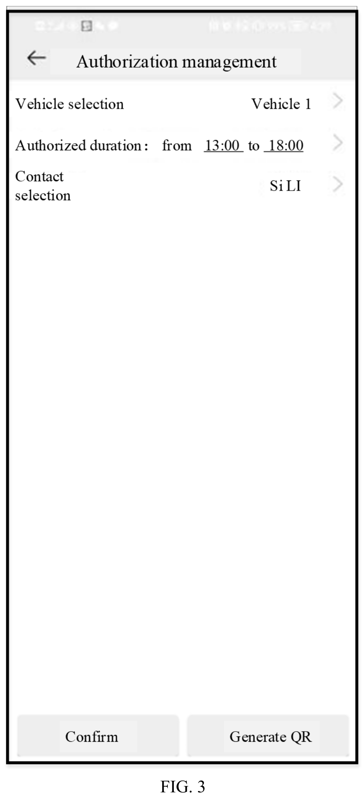

FIG. 3 shows an interface schematic diagram of an application program in the digital key sharing process between the first device and the second device according to embodiments of the present disclosure.

As shown in FIG. 3, an interface schematic diagram of the digital key sharing operations using an application program at the first device is shown. For example, the valid lifetime of the digital key to be shared, the vehicle, and the second device (using the user identification of the second device) can be set in the application program at the first device. Validity configuration information (including valid lifetime information) is generated by the server, after interaction between the application program and the server and processing by the server, and then the validity configuration information is combined with other configuration information to form integrated configuration information. The configuration information is sent to the second device so that a digital key can be generated at the second device, the digital key having a corresponding valid lifetime. Alternatively, the validity configuration information (including valid lifetime information) can also be generated locally at the first device, and sent to the second device via peer-to-peer communication or via servers, for generating the digital key at the second device in combination with other configuration information locally or obtained from the server(s) (e.g., the other configuration information may be pre-stored, or pulled from the server(s) in response to usage information sent by the first device).

In many scenarios, in order to further improve security, during the digital key sharing process, the validity of the digital key can also be considered from the spatial dimension, that is, the digital key at the second device is allowed to control the target object only within the valid space range. If it is determined at the target object that a usage location of the digital key is not within the valid space range, the target object rejects to be controlled by the digital key at the second device.

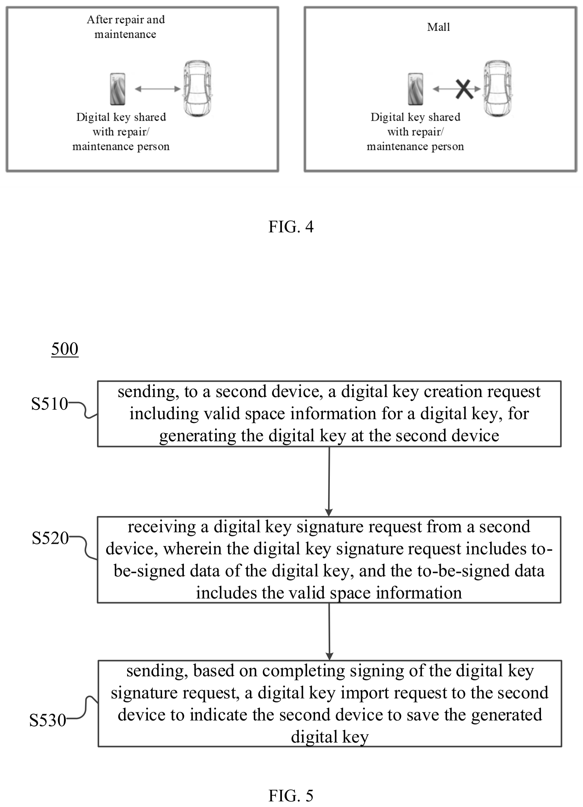

For example, as shown in FIG. 4, the vehicle owner shares the digital key with a repair and maintenance person, and hopes that the repair and maintenance person can use the digital key within the repair shop and cannot use the digital key outside the repair shop (for example, a shopping mall).

Therefore, the embodiments of the present disclosure also provide a solution for sharing the digital key based on the spatial dimension.

FIG. 5 shows a schematic flowchart of a digital key sharing method according to embodiments of the present disclosure. The method may be performed by the first device shown in FIG. 1 or at least a part of the method may be performed by the server shown in FIG. 1, and the digital key has been generated at the first device and is to be shared with the second device. For example, the first device may be a vehicle owner device and the second device may be a device of a repair and maintenance person.

As shown in FIG. 5, in step S510, a digital key creation request including valid space information for the digital key is sent to a second device for generating the digital key at the second device.

Optionally, the valid space information may be sent from the first device to the second device, for example via path 2/3/5/4 in FIG. 1 or direct point-to-point communication to the second device. The valid space information is information for indicating a valid space in which the digital key (second digital key) generated at the second device is allowed to be used, while the digital key (first digital key) generated at the first device may not have the valid space information, as shown in the left half part of data structure shown in FIG. 2, because the digital key at the first device is used by the owner of the target object (e.g., the vehicle), it can control the target object at any time and anywhere.

Optionally, the valid space information may be determined based on a location of the first device, and may be determined by the first device or by the first server of the first device. Further, the valid space information may be included in the validity configuration information.

Optionally, an absolute position on the ground may be used to represent the valid space that allows the usage of the digital key. For example, a shape of the projection area of a space on the ground (rectangle, square, circle, etc.) can be set, and the valid space can be set by the longitude and latitude of each feature point. For example, when the shape of the projection area is a rectangle, the longitude and latitude of the upper left vertex and the longitude and latitude of the lower right vertex can be used to set the valid space (it is defaulted that the height of the space is infinity).

For another example, in some scenarios, when the vehicle owner goes to a repair shop, the location of the vehicle owner's first device is generally not a predetermined location (for example, workplace or home, etc.), and in this case, the valid space information needs to be determined. Accordingly, in response to determining that the location of the first device is not the predetermined location and that the location of the first device is located within a perimeter range of a certain venue (e.g., a repair shop or 4S shop), the valid space may be determined based on the perimeter range of the venue, and then the valid space information on the valid space is included in the validity configuration information.

For example, the space corresponding to the perimeter range of the venue where the first device is located can be directly used as the valid space, or the valid space can be obtained by adjusting (extending or reducing) the perimeter range of the venue. For example, when the vehicle owner goes to the repair shop to repair the vehicle, the valid space can be set as the space corresponding to the perimeter range of the maintenance shop.

For another example, in some scenarios, the perimeter of the place where the vehicle owner's first device is located is unclear, for example, the first device is located on the side of the road. At this time, it is difficult to determine the perimeter of the place where the vehicle owner's first device is located, so a projected location of the first device on the ground can be regarded as a symmetry point, and the same preset distance or different preset distances can be moved respectively around the symmetry point (it is defaulted that the height of the space is infinity), to obtain the perimeter range of the place where the vehicle owner's first device is located. The valid space of the digital key can be obtained based on the obtained perimeter range, and then the valid space information on the valid space is included in the validity configuration information.

Optionally, the space corresponding to the perimeter range of the venue where the first device is located can be processed so that the perimeter range is more regular. For example, the perimeter range of some venues is an ellipse, and the ellipse can be processed by moving a center of the ellipse in four directions by the same preset distance or different preset distances (it is defaulted that the height of the space is infinity), to obtain an adjusted perimeter range. The valid space of the digital key is obtained based on the obtained perimeter range, and then the valid space information on the valid space is included in the validity configuration information.

Optionally, after the first device determines the valid space information of the digital key based on the location of the first device, the first device may create the validity configuration information (for example, endpoint configuration, where endpoint is a common interface manner in this field, and has a standard configuration manner), where the validity configuration information includes the determined valid space information. Alternatively, the first device may also send the location of the first device to the server, and the server determines the valid space information based on the location of the first device, and creates the validity configuration information accordingly.

Accordingly, the second device may obtain the validity configuration information and then obtain further configuration information (e.g., saved locally or from a server) for generating the digital key, and generate the digital key at the second device based on such configuration information. For example, the generated digital key may have the data structure as shown in FIG. 2, and additionally, since the digital key generated by the second device also includes the valid space information, the right half part of data structure should also include a line of information (e.g., location) to indicate the valid space information of the digital key.

In step S520, a digital key signature request is received from the second device, where the digital key signature request includes to-be-signed data of the digital key, and the to-be-signed data includes the valid space information.

For example, the digital key signature request may be sent from the second device to the first device, such as via path 4/5/3/2 in FIG. 1 or via a direct point-to-point communication to the first device.

For example, after the digital key is generated at the second device, in order to be more secure, the first device also needs to sign and confirm the second digital key before it can be used to control the target object (e.g., vehicle). For example, the to-be-signed data that the second device may send to the first device may include valid space information of the generated digital key, and optionally a certificate of the generated digital key, identification information of the second device, user identity information of the second device, and so on.

In step S530, based on completing the signing of the digital key signature request, a digital key import request is returned to the second device (as a digital key signature response) to indicate to save the generated digital key.

For example, the digital key import request may be sent from the second device to the first device e.g., via path 2/3/5/4 in FIG. 1, or via a direct point-to-point communication to the first device. For example, the digital key import request may include valid space information of the digital key passing signature confirmation, and the like. After receiving the digital key signature response, the second device can save the generated digital key so that it can be used later to control the target object.

Therefore, through the method described in FIG. 5, the validity of the digital key is considered from the spatial dimension, and the security of the digital key sharing process is improved in the spatial dimension.

Optionally, in some scenarios, after the digital key sharing process is completed, that is, after the digital key has been generated, during actual usage, the expected usage space range of the digital key (indicated by the valid space information for the digital key) may appear to be smaller than the actual usage space range. For example, the vehicle needs to be transported to the repair shop outside the 4S store for complex repairs, but the expected usage space range is only preset to the perimeter range of the 4S store. Therefore, when the digital key is used in the repair shop, because its usage location is outside the expected usage space range, it cannot control the vehicle, and the owner of the vehicle is required to re-share the digital key, which affects the user experience.

Thus, in further embodiments, the validity configuration information may also include extended valid space information for the digital key, and after the second device obtains such validity configuration information, the generated digital key also includes extended valid space information. That is, the digital key can also be used within the extended valid space corresponding to the extended valid space information.

Optionally, the extended valid space can also be determined in a similar manner to the determination of the valid space as described above, and the space range of the extended valid space is larger than the space range of the valid space. The space range of the extended valid space is also within the range acceptable or expected by the user (vehicle owner) of the first device. For example, the repair shop is within 1km from the 4S store, so the extended valid space can be extended to the space 1km away from the perimeter of the 4S shop (all spaces are expressed by ground latitude and longitude or coordinates).

In this way, the digital key generated at the second device can correspond to two different ranges of valid spaces. When the usage location of the digital key is not within the smaller valid space, it can be further determined whether it is within the extended valid space.

In addition, according to different actual situations, a larger number of extended valid spaces can be set, which is not limited by the present disclosure.

Therefore, as mentioned above, by setting different ranges of valid spaces, it can be avoided that the first device shares the digital key multiple times, thereby improving the user experience.

Optionally, the validity of the digital key may also be considered from both the temporal dimension and the spatial dimension, in which case the validity configuration information may also include valid lifetime information for the digital key. That is, after being combined with the previous valid space or extended active space, the digital key can also be used within the previous valid space or extended active space and within the valid lifetime.

Similarly, after the digital key sharing process is completed, that is, after the digital key has been generated at the second device, during actual usage, the expected usage time range of the digital key (indicated by the valid lifetime information for the digital key) may be smaller than the actual usage time range. For example, the maintenance of the vehicle needs more time than the maximum time of the expected usage time range. Therefore, when the digital key is used in the repair shop, because its usage time exceeds the expected usage time range, it cannot control the vehicle, and the owner of the vehicle is required to re-share the digital key, which affects the user experience.

Therefore, in order to avoid the first device from sharing the digital key multiple times, the validity configuration information may also include valid lifetime information and extended valid lifetime information for the digital key.

As such, the digital key can correspond to two different durations of valid lifetime. When the usage time of the digital key is not within the valid lifetime with the smaller duration and the usage location is within the valid space, it can be further determined whether it is within the extended valid lifetime with the larger duration. For example, the valid lifetime with the smaller duration is 13:00-18:00, and the extended valid lifetime with the larger duration is 12:00-21:00. Alternatively, in some cases, the start time of the valid lifetime is unchanged and only the end time is extended, for example, the extended valid lifetime is 13:00-18:00.

The process by which the digital key generated at the second device controls the target object based on such valid space information and valid lifetime information will be described in detail later.

Alternatively, the digital key generated at the second device may have the data structure of the certificate as shown in the left half part of FIG. 2, and additionally, because the digital key also includes one or more of: valid space information, extended valid space information, valid lifetime information, and extended valid lifetime information, the data structure shown in the right half part of FIG. 2 should also include corresponding information (e.g., location, dynamic location, validity start/end and/or dynamic validity start/end) to indicate these spatial information and temporal information.

Therefore, as mentioned above, through simultaneously limiting the usage range of the digital key from the temporal dimension and the spatial dimension, the security of the digital key can be improved, and further, by setting different ranges of valid spaces and/or different durations of valid lifetime, it is possible to avoid the first device from sharing the digital key multiple times, which improves convenience, thereby improving the user experience.

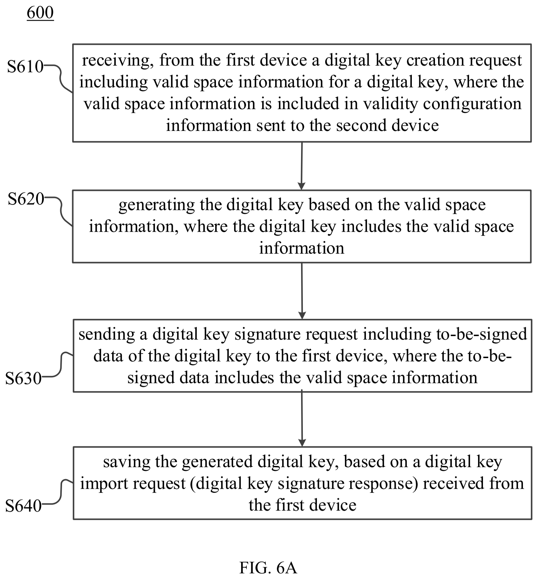

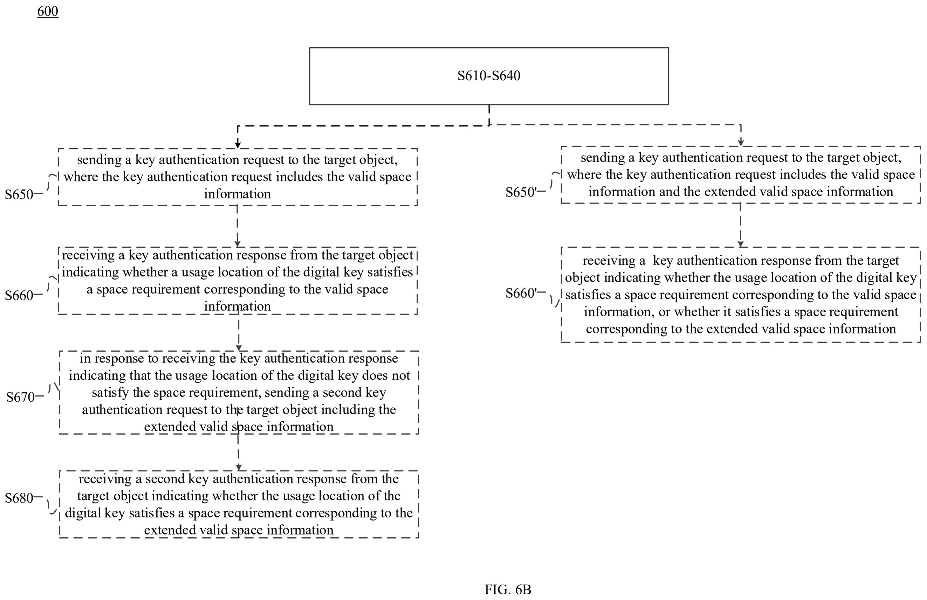

FIG. 6A to FIG. 6B each show a schematic flowchart of a digital key sharing method according to the embodiments of the present disclosure. The method may be performed by the second device shown in FIG. 1 or at least a part of the method may be performed by the server shown in FIG. 1, and the digital key has been generated at the first device and is to be shared with the second device. For example, the first device may be a vehicle owner device and the second device may be a device of a repair and maintenance person.

As shown in FIG. 6A, in step S610, a digital key creation request including valid space information for a digital key is received from the first device, where the valid space information is included in validity configuration information sent to the second device.

In step S620, the digital key is generated based on the valid space information, where the digital key includes the valid space information.

In step S630, a digital key signature request including to-be-signed data of the digital key is sent to the first device, where the to-be-signed data includes the valid space information.

In step S640, based on a digital key import request (digital key signature response) received from the first device, the generated digital key is saved.

Steps S610-640 are steps corresponding to steps S510-530 described above with reference to FIG. 5. Therefore, more details can be referred to the relevant description of FIG. 5, and therefore the description will not be repeated here.

The following mainly focuses on the process of the second device using the generated digital key to control a target object. The following steps may be performed by the second device in FIG. 1 or at least partially by the server shown in FIG. 1.

For example, in step S650, a key authentication request is sent to the target object, where the key authentication request includes the valid space information.

Optionally, the second device may send the key authentication request to the target object (e.g., vehicle) via path 4/5/1 and the target object's server (e.g., vehicle server 600) or via direct point-to-point communication shown in FIG. 1, for authentication.

For example, the second device (for example, the mobile terminal of the repair and maintenance person) may send an unlocking request to the vehicle and notify the vehicle via the request that the digital key can only be used within the space range corresponding to the valid space information.

In step S660, a key authentication response is received from the target object, where the key authentication response indicates whether a usage location of the digital key satisfies a space requirement corresponding to the valid space information.

Correspondingly, optionally, the second device may receive the key authentication response from the target object (e.g. the vehicle) via path 1/5/4 and the server of the target object (e.g. the vehicle server 600) or via direct point-to-point communication shown in FIG. 1. For example, after receiving the valid space information, the vehicle can determine its corresponding space range, and since the usage location of the digital key is close to the vehicle location when unlocking the vehicle, the vehicle can use its own vehicle location as the estimated usage location of the digital key, and determine whether the estimated usage location is within the valid space indicated by the valid space information, that is, whether the usage location of the digital key satisfies the space requirement corresponding to the valid space information, and return the key authentication response to the second device.

In addition, as described earlier, the validity configuration information may further include extended valid space information for the digital key, and correspondingly the digital key further includes the extended valid space information.

Therefore, the method 600 may also include step S670 and step S680.

In step S670, in response to receiving the key authentication response from the target object indicating that the usage location of the digital key does not satisfy the space requirement corresponding to the valid space information, a second key authentication request is sent to the target object, and the second key authentication request includes the extended valid space information.

In step S680, a second key authentication response is received from the target object, where the second key authentication response indicates whether the usage location of the digital key satisfies a space requirement corresponding to the extended valid space information.

That is, when the usage location of the digital key cannot satisfy the current space requirement for the first time and thus the target object cannot be controlled, the second device can update the valid space information (that is, use the extended valid space information) and notify the target object that the valid space has been updated and extended by sending the key authentication request again, so that it can be determined at the target object whether the usage location of the digital key satisfies the updated space requirement based on the updated extended valid space.

Optionally, the second device, after updating the valid space information, may notify the first device that it uses the extended valid space information. For example, the second device may send a notification message to the first device through peer-to-peer communication, or the notification message can also be sent to the first device via the server. For example, the notification message can be sent to the server of the target object via the second server of the second device, and then sent by the server of the target object to the first server of the first device, and finally sent by the first server to the first device, and so on.

In addition, the valid space information and the extended valid space information can also be sent to the target object at once, for example, through one key authentication request.

In this case, steps S650-680 can be replaced with the following steps.

In S650', a key authentication request is sent to the target object, where the key authentication request includes the valid space information and the extended valid space information; and in step S660', a key authentication response is received from the target object, where the key authentication response indicates whether the usage location of the digital key satisfies a space requirement corresponding to the valid space information or satisfies a space requirement corresponding to the extended valid space information.

For example, after receiving the valid space information and the extended valid space information, the target object can determine their corresponding space ranges, and then the target object can first determine whether the estimated usage location of the digital key is within the valid space indicated by the valid space information, that is, whether the usage location of the digital key satisfies a space requirement corresponding to the valid space information, and if so, returns a key authentication response to the second device indicating that the space requirement is satisfied. On the contrary, the target object can further determine whether the estimated usage location of the digital key is within the extended valid space indicated by the extended valid space information, that is, whether the usage location of the digital key satisfies a space requirement corresponding to the extended valid space information, and returns a key authentication response indicating whether the space requirement corresponding to the extended valid space information is satisfied. At this time, the key authentication response may also indicate that the usage location of the digital key does not satisfy the space requirement corresponding to the valid space information.

Optionally, as described above, the validity configuration information may further include valid lifetime information for the digital key or may further include both the valid lifetime information and the extended valid lifetime information, and correspondingly, the digital key generated at the second device may further include valid lifetime information or may further include both the valid lifetime information and the extended valid lifetime information.

In this case, at least one of the valid lifetime information and the extended valid lifetime may be included in the validity configuration information in addition to the valid space information and the extended valid space information as described earlier.

For example, it can be divided into the following cases:
Case 1: the validity configuration information includes the valid space information and the valid lifetime information;
Case 2: the validity configuration information includes the valid space information, the extended valid space information, and the valid lifetime information;
Case 3: the validity configuration information includes the valid space information, the valid lifetime information and the extended valid lifetime information; and
Case 4: the validity configuration information includes the valid space information, the extended valid space information, the valid lifetime information and the extended valid lifetime information.

Correspondingly, the digital key generated at the second device also includes such information, so when the second device sends the key authentication request to the target object, different spatial information and/or different time information can be included in the key authentication request according to different situations.

For example, as in case 2, the second device may first send a first key authentication request to the target object, where the first key authentication request includes the valid space information and the valid lifetime information; and in response to receiving a key authentication failure response from the target object indicating that the usage location of the digital key does not satisfy the space requirement corresponding to the valid space information (and the usage time of the digital key satisfies the time requirement corresponding to the valid lifetime information), the second device sends a second key authentication request to the target object, the second key authentication request including the extended valid space information (optionally also re-includes the valid lifetime information, which may or may not be included). The second device receives a second key authentication response from the target object, where the second key authentication response indicates whether the usage location of the digital key satisfies the space requirement corresponding to the extended valid space information. If the space requirement corresponding to the extended valid space information is satisfied and the temporal requirement is still satisfied, the digital key of the second device is allowed to control the target object.

Alternatively, in response to receiving a key authentication failure response from the target object indicating that the usage time of the digital key does not satisfy the time requirement corresponding to the valid lifetime information (regardless of whether the usage location of the digital key satisfies the space requirement corresponding to the valid space information or the extended valid space information), since the digital key at the second device does not include the extended valid lifetime information, the second device will no longer send a second key authentication request to the target object. At this time, the digital key of the second device is prohibited from controlling the target object.

Alternatively, in response to receiving a key authentication success response from the target object indicating that the usage location of the digital key satisfies the space requirement corresponding to the valid space information and the usage time of the digital key satisfies the time requirement corresponding to the valid lifetime information, that is, the digital key of the second device is successfully authenticated, so that the digital key of the second device is allowed to control the target object.

Of course, the second device can include all information (the valid space information, the extended valid space information and the valid lifetime information for case 2) when sending the key authentication request to the target object for the first time. In this way, judgement can be performed once or twice on the target object side without subsequently sending the key authentication request again, thereby reducing signaling overhead.

For example, for case 2, after receiving the key authentication request, the target object can first determine whether the usage location of the digital key satisfies the space requirement corresponding to the valid space information and whether the usage time satisfies the time requirement corresponding to the valid lifetime information. If the space requirement and the time requirement are satisfied, the digital key is allowed to control the target object. If the time requirement is not satisfied (regardless of whether the space requirement is satisfied), the digital key is prohibited from controlling the target object (because there is no extended valid lifetime information). If the time requirement is satisfied but the space requirement is not satisfied, it is further determined whether the usage location of the digital key satisfies an updated space requirement corresponding to the extended valid space information, and if the updated space requirement is satisfied and the time requirement is still satisfied, the digital key is allowed to control the target object.

The interaction process between the second device and the target object is also similar in other cases. For example, if one of the two requirements (i.e., space requirement and time requirement) mentioned above cannot be updated (i.e., the digital key does not include corresponding extended information), then when such requirements cannot be satisfied, the digital key is prohibited from controlling the target object. If one of the requirements is not currently satisfied but can be updated and the other requirement is satisfied, it can be further determined whether the updated requirement is satisfied, and the digital key is allowed to control the target object if the updated requirement is satisfied and the other requirement is still satisfied. If both requirements can be updated but are not currently satisfied, it is further determined whether both of the updated requirements are satisfied, and when both of the updated requirements are satisfied, the digital key is allowed to control the target object.

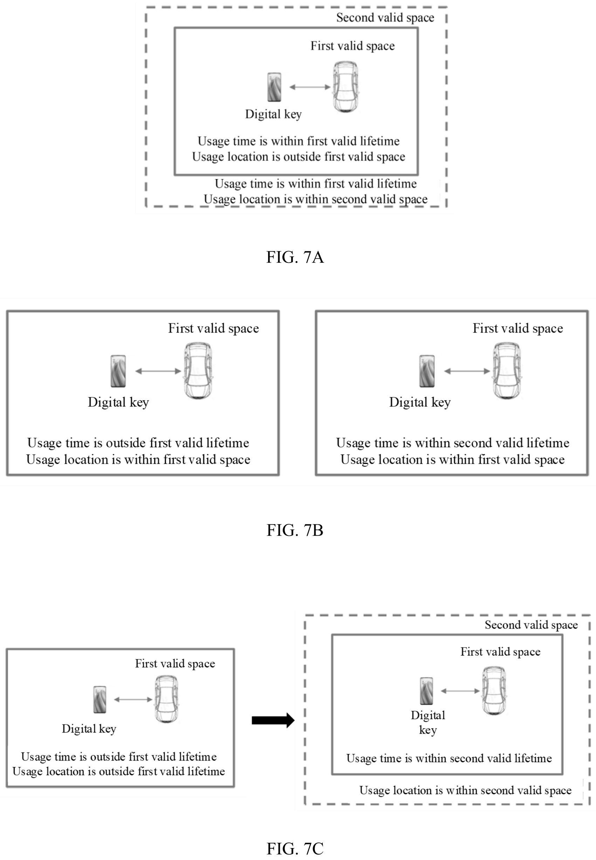

For example, FIG. 7A to FIG. 7C show examples of a relationship of usage time and usage space of the digital key to valid lifetime and the valid space, respectively.

For example, in FIG. 7A, the usage time of the digital key is within the first valid lifetime, but the usage location is located outside the first valid space. After updating the space requirement based on the extended valid space information, the usage location is located within the updated second valid space and the usage time is still within the first valid lifetime, so the digital key can control the target object.

For example, in FIG. 7B, the usage time of the digital key is outside the first valid lifetime and the usage location is within the first valid space, and after updating the time requirement based on the extended valid lifetime information, the usage time is within the updated second valid lifetime and the usage location is still within the first valid space, so the digital key can control the target object.

For another example, in FIG. 7C, the usage time of the digital key is outside the first valid lifetime and the usage location is also outside the first valid space, and after updating the space requirement based on the extended valid space information and updating the time requirement based on the extended valid lifetime information, the usage time is within the updated second valid lifetime and the usage location is within the updated second valid space, so the digital key can control the target object.

Therefore, as above, through sending the key authentication request to the target object by the second device, and through authentication at the target object, security control of the target object by the digital key can be achieved.

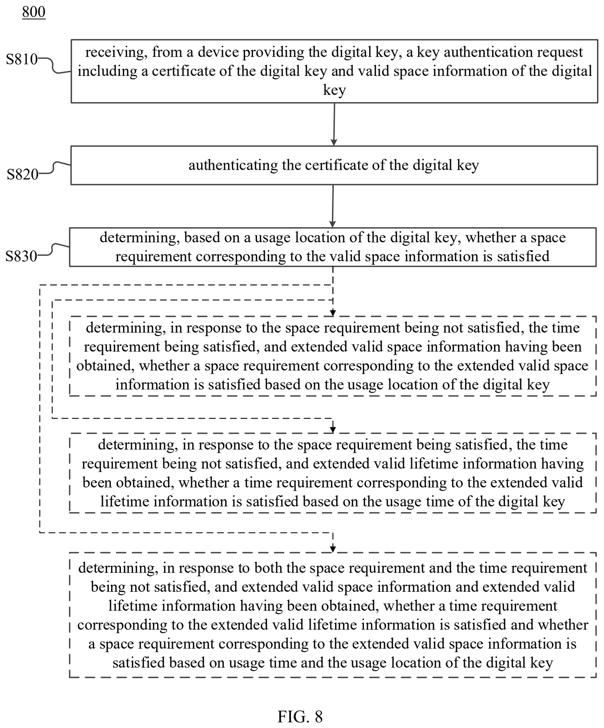

FIG. 8 shows a schematic flowchart of a method for authenticating a shared digital key according to the embodiments of the present disclosure. The method may be performed by the target object or the server of the target object or both. For example, it may be performed by the vehicle (this is taken as an example below) or at least part of the method may be performed by the vehicle server shown in FIG. 1.

As shown in FIG. 8, in step S810, a key authentication request including a certificate of the digital key and valid space information of the digital key is received from a device providing the digital key.

For example, the key authentication request may be received from the second device providing the shared digital key via path 4/5/1 or via the direct peer-to-peer communication shown in FIG. 1.

In step S820, the certificate of the digital key is authenticated.

The data structure of the certificate of the digital key may be the data structure shown with reference to the left half part of data structure in FIG. 2, including various relevant information of the digital key for verification or authentication. Optionally, the authentication process may include performing an authentication operation by the target object or performing an authentication operation by the server of the target object.

In step S830, it is determined whether a space requirement corresponding to the valid space information is satisfied based on a usage location of the digital key.

Optionally, in the case where the space requirement corresponding to the valid space information is not satisfied and the extended valid space information of the digital key has been obtained, it is determined whether a space requirement corresponding to the extended valid space information is satisfied based on the usage location of the digital key. Thus, the digital key is allowed to control the target object when the space requirement corresponding to the extended valid space information is satisfied, and otherwise, the digital key is prohibited from controlling the target object.

As described previously with reference to FIG. 6A to FIG. 6B, the extended valid space information obtained from the device can be obtained from the key authentication request received from the device for the first time, or can be obtained from the key authentication request received from the device for the second time.

Optionally, as mentioned above, the key authentication request may also include valid lifetime information, so that the target object can determine whether a time requirement corresponding to the valid lifetime information is satisfied based on usage time of the digital key. In this case, if at least one of the space requirement and the temporal requirement is not satisfied, the digital key is prohibited from controlling the target object.

Generally, in order to ensure security, the digital key generally needs to be used within the valid space and the valid lifetime. Therefore, the generated digital key will generally include information about the valid space and information about the valid lifetime, and when requesting authentication of the target object, the sent key authentication request will also include the information about the valid space and the information about the valid lifetime. Of course, when the security requirement is not that high, it is also possible to include only one of the information about the valid space and the information about the valid lifetime.

The following description is based on the fact that the key authentication request includes information about the valid space (valid space information and/or extended valid space information) and information about the valid lifetime (valid lifetime information and/or extended valid lifetime information).

For example, the key authentication request also includes at least one of extended valid space information and extended valid lifetime information of the digital key, so the method 800 may further include step S840. In step S840, when the space requirement (valid space information) is not satisfied and the time requirement (valid lifetime information) is satisfied, and the extended valid space information has been obtained (for example, from the device sending the key authentication request), it is determined whether the space requirement corresponding to the extended valid space information is satisfied based on the usage location of the digital key. Thus, when the space requirement corresponding to the extended valid space information is satisfied and the time requirement is still satisfied, the digital key is allowed to control the target object, otherwise, the digital key is prohibited from controlling the target object.

Alternatively, the method 800 may further include step S850. In step S850, when the space requirement is satisfied and the time requirement is not satisfied, and the extended valid lifetime information has been obtained, it is determined whether the time requirement corresponding to the extended valid lifetime information is satisfied based on the usage time of the digital key. Thus, when the time requirement corresponding to the extended valid lifetime information is satisfied and the space requirement is still satisfied, the digital key is allowed to control the target object, otherwise, the digital key is prohibited from controlling the target object.

Alternatively, the method 800 may further include step S860. In step S860, when neither the space requirement nor the time requirement is satisfied, and the extended valid space information and the extended valid lifetime information have been obtained, it is determined whether the space requirement corresponding to the extended valid space information and the time requirement corresponding to the extended valid lifetime information are satisfied based on the usage location and the usage time of the digital key, respectively. In this way, the digital key is allowed to control the target object when both the updated time requirement and the space requirement are satisfied, otherwise the digital key is prohibited from controlling the target object.

Optionally, as described with reference to FIGS. 6A-6B, the obtained extended valid space information or extended valid lifetime information can be obtained from the key authentication request received from the device for the first time, or can be obtained from the key authentication request received from the device for the second time.

Therefore, through the above method performed at the target object, security control of the target object by the digital key can be achieved, and due to the addition of extended valid space information and/or extended valid lifetime information, repeated sharing of the digital key can be avoided, and convenience is also improved, thereby improving the user experience.

It should be noted that in the foregoing embodiments, especially the embodiment shown in FIG. 5, the digital key sharing process is schematically described with the first device and the second device as the subject to perform the process, and involves the peer-to-peer communication between the first device and the second devices and the communication via the servers. However, at least part of the digital key sharing process performed at the first device and the second device as described above may be implemented by the server. The server may be a single server, or may include a first server for the first device, a second server for the second device, and a server for the target object. For convenience, the server is explained here as a single server as an example. The following introduces some operations on digital key sharing on the server side.

First, the server may receive a digital key creation request from the first device (e.g., via path 7 or path 2/3 (for vehicle server), or via path 2 (for first server), or via path 2/3/5/4 (for second server), shown in FIG. 1), where the digital key creation request includes location information of the first device for determining valid space information of the digital key or includes the valid space information.

This process may correspond to the process of step S510 above. Therefore, the process of how to determine valid space information based on the location of the first device can refer to the previous description. Optionally, the valid space information may be determined by the server. In this case, the digital key creation request may only include the location information of the first device, so that the valid space information is determined by the server based on the location information of the first device.

Optionally, the digital key creation request may also include identification information of the target object and identification information of the second device (for example, identity information of the user of the second device). For example, the first device (e.g., vehicle owner device) may have generated a digital key (first digital key, or digital key to be shared) that can be used unlimited based on the first configuration information from the server, and may then request the server to let the second device to control the vehicle, so the server can be notified to share relevant information, for example, the request may include the identification of the object to be shared (that is, the second device), the identification of the object to be controlled (such as the vehicle), and information on the location where the digital key is allowed to be used.

The server may then generate configuration information for generating the digital key at the second device based on the valid space information.

Optionally, the configuration information for generating the digital key at the device is generated at the server.

Optionally, since the generation of the digital key at the device requires obtaining configuration information from the server, the configuration information of the generated digital key can be saved at the server. As previously shown in FIG. 2, the data structures of the digital key at the second device and the digital key at the first device have the same part (left half part), and the digital key generated at the second device has an additional part (right half part), therefore, second configuration information for the digital key at the second device can be generated based on at least part of the configuration information of the digital key at the first device and the received information related to the sharing process.

The server may then send the second configuration information to the second device for generating the digital key at the second device. Alternatively, the server may also generate the digital key based on the second configuration information, and then send the generated digital key to the second device, and the digital key is saved after signature confirmation at the server or the first device as described later. The digital key comprises the valid space information, i.e. the digital key at the second device can be used within the space range corresponding to the determined valid space information. For example, in FIG. 1, the second configuration information is sent to the second device via path 5/4 or via path 6 if generated at the vehicle server, via path 3/5/4 or via path 3/6 if generated at the first server, and via path 4 if generated at the second server.

In addition, on the other hand, the server may also receive a digital key signature request from the second device, where the digital key signature request includes to-be-signed data of the digital key generated at the second device, and the to-be-signed data includes the valid space information.

This process may correspond to the process of step S520 above.

Then, the server may also perform signature confirmation on the digital key signature request and send a digital key import request to the second device, or may forward the digital key signature request to the first device for the first device to perform signature confirmation, to receive a digital key import request from the first device after the signature confirmation, and to send the digital key import request to the second device to indicate the second device to save the generated second digital key.

This process may correspond to the process of step S530 above.

Optionally, the digital key creation request may also include valid lifetime information, so the server further generates the configuration information based on the valid lifetime, and the digital key generated by the second device also includes the valid lifetime.

Optionally, the digital key creation request may further include at least one of extended valid space information and extended valid lifetime information, so the server generates the configuration information further based on the at least one of the extended valid space information and the extended valid lifetime information, and the digital key at the second device further includes the at least one of the extended valid space information and the extended valid lifetime information.

That is to say, the communication and interaction between the first device and the second device as described above can be completed through one or more servers, and at least part of the operations at the first device or the second device can be performed through the one or more servers, which is not limited in the present disclosure.

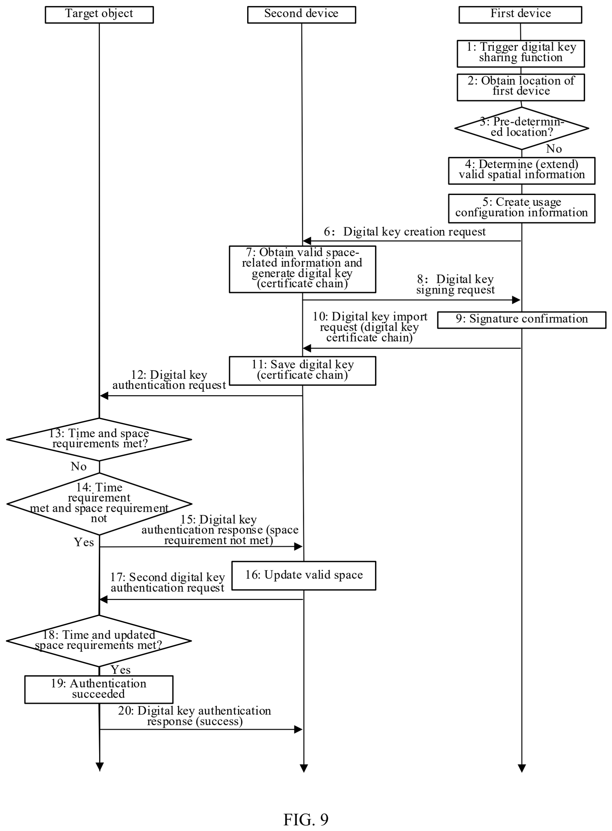

FIG. 9 exemplarily describes a schematic diagram of processes of the digital key sharing method, which shows an interaction between the first device, the second device and the target object. FIG. 9 illustrates that validity configuration information includes valid space information, valid lifetime information, and extended valid space information, as an example.

It should be noted that although direct communication between devices and devices and vehicles is shown in FIG. 9, it should be understood that this may also include communication via a server.

As shown in FIG. 9, in process 1, the first device (for example, the vehicle owner device) triggers a digital key sharing function, for example, in response to a user input.

In process 2, the first device obtains a current location, then in process 3, the first device determines whether the current location is a predetermined location (e.g., a resident location), and if not, obtains a corresponding perimeter range in process 4, to determine valid space information for the digital key and extend the valid space information.

In process 5, the first device creates validity configuration information (such as endpoint configuration), and the validity configuration information includes the valid space information and the extended valid space information.

In process 6, the first device sends a digital key creation request to the second device, which may include the validity configuration information.

In process 7, the second device acquires the validity configuration information so that the valid space information and the extended valid space information can be acquired, and thus generates a digital key based on the valid space information, the data structure of the digital key including a certificate of the digital key and the valid space information and the extended valid space information of the digital key.

In process 8, the second device sends a digital key signature request to the first device, the request including the certificate of the digital key and the valid space information and the extended valid space information of the digital key.

In process 9, the first device performs signature confirmation on the certificate of the digital key and the valid space information and the extended valid space information of the digital key received from the second device.

In process 10, the first device sends a digital key import request, which includes the certificate of the digital key and the valid space information and the extended valid space information of the digital key received from the second device. The request can be regarded as a sharing confirmation indication or a response to the signature request.

In process 11, the second device stores the certificate of the digital key generated at the second device and the valid space information and the extended valid space information.

In process 12, the second device sends a digital key authentication request to a vehicle, where the request includes valid lifetime information and valid space information of the digital key generated at the second device.

In process 13, the vehicle determines whether a time requirement and a space requirement corresponding to the valid lifetime information and the valid space information are satisfied. If they are not satisfied at the same time, it is further determined in process 14 that the time requirement is satisfied and the space requirement is not satisfied. In process 15, the vehicle returns a digital key authentication response to the second device, where the response indicates that the space requirement is not satisfied.

In procedure 16, the second device updates the valid space of the digital key based on the extended valid space information in the generated digital key.

Optionally, after the second device updates the valid space of the digital key, the second device sends a notification message to the first device to notify the first device that the valid space of the digital key at the second device has dynamically extended. For example, the second device can send the notification message to the first device through point-to-point communication, or can send it to the vehicle server through the server of the second device, and then the vehicle server sends it to the first device server, and finally the first device server sends it to the first device.

In process 17, the second device sends the digital key authentication request to the vehicle again, where the request includes valid lifetime information (corresponding to the non-updated valid lifetime) and extended valid space information (corresponding to the updated valid space).

In process 18, it is determined whether the time requirement and the space requirement corresponding to the valid lifetime information and the extended valid space information are satisfied. If they are satisfied at the same time, the digital key is successfully authenticated in process 19 and can be used to control the vehicle. In process 20, an authentication response is returned.

Of course, the above processes 12-20 accomplish the digital key authentication based on sending the digital key authentication request (including the extended valid space information) multiple times, but it should be understood that the extended valid space information together with the valid space information and the valid lifetime information may be sent to the vehicle the first time the digital key authentication request is sent, as described above.

In addition, in FIG. 9, it is schematically shown that the first device, the second device and the vehicle communicate and interact directly, but it should be understood that the communication and interaction between them can still be completed based on communication and interaction between respective servers, and at least part of the operations of each of the first device, the second device and the vehicle can also be performed by its corresponding server, which is not limited in the present disclosure.

Therefore, through simultaneously limiting the usage range of the digital key from the spatial dimension and temporal dimension, the security of the digital key can be improved. In addition, by setting different ranges of valid space and/or different durations of lifetime, the digital key can be avoided from being shared multiple times, improving convenience, thereby improving user experience.

According to another aspect of the present disclosure, an electronic device is also provided.

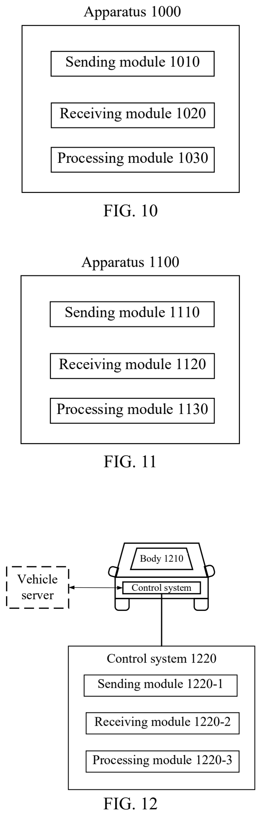

FIG. 10 shows a structural block diagram of a digital key sharing apparatus according to embodiments of the present disclosure. The electronic device may be the first device or the first server in FIG. 1.

As shown in FIG. 10, the apparatus 1000 may include a sending module 1010, a receiving module 1020, and a processing module 1030. Optionally, the sending module 1010 and the receiving module 1020 may be implemented by one transceiver module.

The transmission module 1010 may send, to a second device, a digital key creation request including valid space information for a digital key, for generating a digital key at the second device.

The receiving module 1020 may receive a digital key signature request from the second device, where the digital key signature request includes to-be-signed data of the digital key, and the to-be-signed data includes the valid space information.

The processing module 1030 may perform signature confirmation on the received digital key signature request, and based on completion of signing the digital key signature request, send a digital key import request to the second device through the sending module 1010 to indicate the second device to save the generated digital key.

Optionally, the processing module 1030 may also determine the valid space information based on a location of the first device, where the sending module 1010 may include the valid space information in the validity configuration information sent from the first device to the second device.

Optionally, the validity configuration information further includes extended valid space information for the digital key, such that the digital key generated at the second device includes the extended valid space information.

Optionally, the validity configuration information further comprises valid lifetime information for the digital key, such that the digital key generated at the second device further comprises the valid-lifetime information; or the validity configuration information further includes valid lifetime information and extended valid lifetime information for the digital key, and the digital key further includes the valid lifetime information and the extended valid lifetime information.

For more details of the operations performed by the various modules, reference can be made to the previous description with respect to FIG. 5, so the description will not be repeated here.

FIG. 11 shows a structural block diagram of a digital key sharing apparatus according to embodiments of the present disclosure. The electronic device may be the second device or the second server in FIG. 1.

As shown in FIG. 11, the apparatus 1100 may include a sending module 1110, a receiving module 1120, and a processing module 1130. Optionally, the sending module 1110 and the receiving module 1120 may be implemented by one transceiver module.

The receiving module 1120 may receive, from the first device, a digital key creation request including valid space information for a digital key, where the valid space information is included in validity configuration information sent from the first device to the second device.

The processing module 1130 may generate the digital key based on the valid space information, where the digital key includes the valid space information.

The sending module 1110 may send a digital key signature request including to-be-signed data of the digital key to the first device, where the second to-be-signed data includes the valid space information.

The processing module 1130 may also save the generated second digital key based on a digital key import request (digital key signature response) received from the first device.

After completing the sharing process of the digital key, the target object needs to authenticate the digital key so that the digital key can control the target object.

For example, the sending module 1110 may also send a key authentication request to the target object, where the key authentication request includes the valid space information. The receiving module 1120 may also receive a key authentication response from the target object, where the key authentication response indicates whether the usage location of the digital key satisfies the space requirement corresponding to the valid space information.

Optionally, when there are several cases mentioned above and the space requirement and/or the time requirement needs to be updated at the second device, the processing module 1130 or the sending module 1110 may generate a second digital key authentication request, and include the extended valid space information and/or the extended valid lifetime information in the request.

For more details of the operations performed by the various modules, reference may be made to the foregoing description with respect to FIGS. 6A to 7B, and therefore the description will not be repeated here.

FIG. 12 shows a structural block diagram of a vehicle according to embodiments of the present disclosure. The vehicle may be the vehicle in FIG. 1.

As shown in FIG. 12, the vehicle 1200 may include a vehicle body 1210 and a control system 1220, which may include a sending module 1220-1, a receiving module 1220-2, and a processing module 1220-3. The control system of the vehicle 1200 may operate in conjunction with the vehicle server.

For example, the receiving module 1220-2 may receive, from a device that provided a digital key (e.g., from the second device or from a server of the second device via a vehicle server), a key authentication request including a certificate and valid space information of the digital key.

The processing module 1220-3 may authenticate the certificate of the digital key and determine whether the space requirement corresponding to the valid space information is satisfied based on the usage location of the digital key.

Optionally, when the processing module 1220-3 or the vehicle server determines that the space requirement is not satisfied, the sending module 1220-1 may send a key authentication response to the second device to indicate whether the usage location of the digital key satisfies the space requirement corresponding to valid space information.

For more details of the operations performed by the various modules, reference may be made to the foregoing description with respect to FIGS. 6A-8, so the description will not be repeated here.

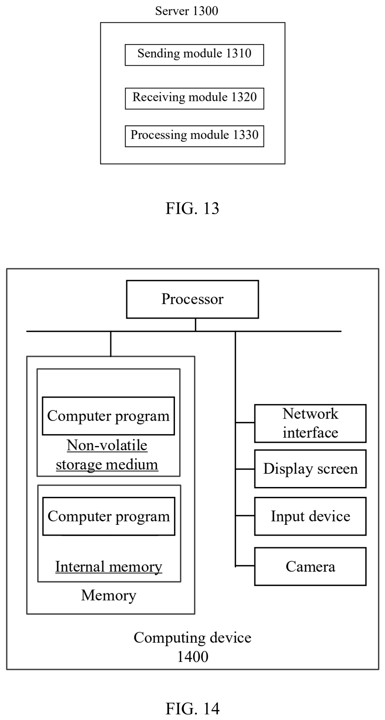

FIG. 13 shows a structural block diagram of a server according to embodiments of the present disclosure. The server can be any server in FIG. lor collective name for multiple servers in FIG. 1.

As shown in FIG. 13, each of the one or more servers 1300 may include a sending module 1310, a receiving module 1320, and a processing module 1330.

The receiving module 1320 may receive, from the first device, a digital key creation request including location information of the first device for determining valid space information of a digital key or including the valid space information.

The processing module 1330 may generate configuration information for generating the digital key at the second device based on the valid space information.

The sending module 1330 may send the configuration information to the second device for generating the digital key at the second device, where the digital key includes the valid space information.

Optionally, the receiving module 1320 may also receive a digital key signature request from the second device, where the digital key signature request includes to-be-signed data of the digital key generated at the second device, and the to-be-signed data includes the valid space information. The processing module 1330 may also perform signature confirmation on the digital key signature request, and send a digital key import request to the second device through the sending module 1310. Alternatively, the sending module 1310 may send a digital key import request to the second device to indicate the second device to save the generated digital key, after the sending module 1310 forwards the digital key signature request to the first device and the receiving module 1320 receives the digital key import request from the first device.

For more details of the operations performed by the various modules, reference may be made to the foregoing description with respect to FIGS. 5 to FIG. 8, and therefore the description will not be repeated here.

In addition, although the above-mentioned modules are shown by way of example in FIGS. 10 to 13, it should be understood that each module can also be divided to include more sub-modules according to different functions, or individual modules can be combined into a new module. In some example embodiments, a module or sub-modules thereof may be implemented with electronic hardware (e.g., a general purpose processor, a digital signal processor (DSP), an application-specific integrated circuit (ASIC), an off-the-shelf programmable gate array (FPGA) or other programmable logic device, discrete gate or transistor logic, discrete hardware components, etc.), computer software (e.g., that may be stored in random access memory (RAM), flash memory, read only memory (ROM), erasable programmable ROM (EPROM), etc.), or a combination thereof.

FIG. 14 shows a schematic block diagram of a computing device according to embodiments of the present disclosure. The computing device may be a first device (or first server), a second device (or second server), or a vehicle as shown in FIG. 1.

As shown in FIG. 14, the computing device 1400 includes one or more processors, one or more memories, network interfaces, input devices, and a display screen connected through a system bus. Among them, the memory includes a non-volatile storage medium and an internal memory. The non-volatile storage medium of the computing device stores an operating system and may also store a computer-executable program. When the computer-executable program is executed by a processor, it may cause the processor to implement various operations of the digital key sharing method or the method for controlling the target object using the digital key as described above. The internal memory may also store a computer-executable program. When the computer-executable program is executed by the processor, it may cause the processor to perform various operations of the digital key sharing method or the method for controlling the target object using the digital key.

Each processor can be an integrated circuit chip with signal processing capabilities. The above-mentioned processor can be a general-purpose processor, a digital signal processor (DSP), an application-specific integrated circuit (ASIC), an off-the-shelf programmable gate array (FPGA) or other programmable logic devices, discrete gate or transistor logic devices, or discrete hardware components. The methods, steps and logical block diagrams disclosed in the embodiments of the present disclosure can be implemented or executed. The general-purpose processor can be a microprocessor or the processor can also be any conventional processor, etc., and can be of X84 architecture or ARM architecture.

The non-volatile memory may be read-only memory (ROM), programmable read-only memory (PROM), erasable programmable read-only memory (EPROM), electrically erasable programmable read-only memory (EEPROM) or flash memory. It should be noted that the memory for implementing the methods described herein is intended to include, without being limited to, these and any other suitable categories of memory.

The display screen of the computing device can be a liquid crystal display screen or an electronic ink display screen, and the input device of the computing device can be a touch layer covered on the display screen, or a key, trackball or touch pad provided on the computing device shell, or it can be an external keyboard, trackpad or mouse, etc.

The computing device may be a terminal or a server. Among them, the terminal may include but are not limited to: a smartphone, a tablet computer, a notebook computer, a desktop computer, a smart TV, etc.; A variety of clients (applications, APPs) can be run in the terminal, such as multimedia playback clients, social clients, browser clients, information flow clients, education clients, etc. The server can be an independent physical server, or a server cluster or distributed system composed of multiple physical servers, or a cloud server which can provide cloud services, cloud databases, cloud computing, cloud functions, cloud storage, network services, cloud communications, middleware services, domain name services, security services, CDN, and basic cloud computing services such as big data and artificial intelligence platforms.

According to another aspect of the present disclosure, a computer-readable storage medium is also provided, which stores a computer program, when executed by a processor, causes the processor to execute respective steps of the digital key sharing method or the method for controlling the target object using the digital key as described above.

According to another aspect of the present disclosure, a computer program product is also provided, including a computer program, when executed by a processor, causes the processor to execute respective steps of the digital key sharing method or the method for controlling the target object using the digital key as described above.

It should be noted that the flowcharts and block diagrams in the accompanying drawings illustrate the architecture, functions and operations of possible implementations of methods and apparatuses according to various embodiments of the present disclosure. In this regard, each block in the flowchart or block diagrams may represent a module, segment, or portion of code, which comprises at least one executable instruction for implementing the specified logical function(s). It should also be noted that, in some alternative implementations, the functions noted in the block may occur out of the order noted in the drawings. For example, two blocks shown in succession may, in fact, be executed substantially concurrently, or the blocks may sometimes be executed in a reverse order, depending upon the functionality involved. It will also be noted that each block of the block diagrams and/or flowchart, and combinations of blocks in the block diagrams and/or flowchart, can be implemented by special purpose hardware-based systems that perform the specified functions or operations, or combinations of special purpose hardware and computer instructions.

The exemplary embodiments of the present disclosure described in detail above are illustrative only and not restrictive. It should be understood by those skilled in the art that various modifications and combinations can be made to these embodiments or features thereof without departing from the principles and spirit of the present disclosure, and such modifications should fall within the scope of the present disclosure.

## Claims

1. A digital key sharing method, performed by a first device, the method comprising:
sending, to a second device, a digital key creation request including valid space information for a digital key, for generating the digital key at the second device;
receiving a digital key signature request from a second device, wherein the digital key signature request includes to-be-signed data of the digital key, and the to-be-signed data includes the valid space information; and
sending, based on completing signing of the digital key signature request, a digital key import request to the second device to indicate the second device to save the generated digital key.

2. The method of claim 1, further comprising:
determining the valid space information based on a location of the first device before sending the digital key creation request,
wherein the valid space information is included in validity configuration information sent from the first device to the second device.

3. The method of claim 2, wherein determining the valid space information based on the location of the first device comprises:
determining, in response to determining that the location of the first device is not a predetermined location and that the location of the first device is within a perimeter range of a venue, a valid space for the digital key based on the perimeter range of the venue; and
including the valid space information on the valid space in the validity configuration information.

4. The method of claim 2, wherein determining the valid space information based on the location of the first device comprises:
taking the location of the first device as a symmetry point, and moving around by a same present distance or different preset distances respectively to obtain a perimeter range, the perimeter range being a valid space for the digital key; and
including valid space information on the valid space in the validity configuration information.

5. The method of claim 2, wherein the validity configuration information further includes extended valid space information for the digital key, and
the digital key includes the extended valid space information.

6. The method of claim 1, wherein the validity configuration information further includes valid lifetime information for the digital key, and the digital key further includes the valid lifetime information; or
the validity configuration information further includes valid lifetime information and extended valid lifetime information for the digital key, and the digital key further includes the valid lifetime information and the extended valid lifetime information.

7. The method of claim 5, wherein when a usage location of the digital key does not satisfy a space requirement corresponding to the valid space information, the extended valid space information is used to determine whether the usage location of the digital key satisfies a space requirement corresponding to the extended valid space information.

8. The method of claim 6, wherein when a usage location of the digital key satisfies a space requirement corresponding to the valid space information and usage time of the digital key does not satisfy a time requirement corresponding to the valid lifetime information, the extended valid lifetime information is used to determine whether the usage time of the digital key satisfies a time requirement corresponding to the extended valid lifetime information.

9. A method for authenticating a shared digital key, performed by a target object, the method comprising:
receiving, from a device providing the digital key, a key authentication request including a certificate of the digital key and valid space information of the digital key;
authenticating the certificate of the digital key; and
determining, based on a usage location of the digital key, whether a space requirement corresponding to the valid space information is satisfied.

10. The method of claim 9, further comprising:
determining, in response to the space requirement being not satisfied and extended valid space information of the digital key having been obtained, whether a space requirement corresponding to the extended valid space information is satisfied based on the usage location of the digital key.

11. The method of claim 9, wherein valid lifetime information is further included in the key authentication request, and
wherein the method further comprises:
determining, based on usage time of the digital key, whether a time requirement corresponding to the valid lifetime information is satisfied.

12. The method of claim 11, further comprising:
prohibiting the digital key from controlling the target object, in response to at least one of the space requirement and the time requirement being not satisfied.

13. The method of claim 11, further comprising:
determining, in response to the space requirement being not satisfied, the time requirement being satisfied and extended valid space information having been obtained, whether a space requirement corresponding to the extended valid space information is satisfied based on the usage location of the digital key.

14. The method of claim 11, further comprising:
determining, in response to the space requirement being satisfied, the time requirement being not satisfied and extended valid lifetime information having been obtained, whether a time requirement corresponding to the extended valid lifetime information is satisfied based on the usage time of the digital key.

15. The method of claim 11, further comprising:
determining, in response to the space requirement and the time requirement being not satisfied, and extended valid space information and extended valid lifetime information having been obtained, whether a space requirement corresponding to the extended valid space information and a time requirement corresponding to the extended valid lifetime information are satisfied based on the usage location and usage time of the digital key, respectively.

16. A digital key sharing method from a first device to a second device, performed by a server, the method comprising:
receiving, from the first device, a digital key creation request including location information of the first device for determining valid space information of the digital key or including the valid space information;
generating configuration information for generating the digital key at the second device based on the valid space information; and
sending the configuration information to the second device for the second device to generate the digital key, wherein the digital key includes the valid space information.

17. The method of claim 16, further comprising:
receiving a digital key signature request from the second device, wherein the digital key signature request includes to-be-signed data of the digital key generated at the second device, and wherein the to-be-signed data includes the valid space information; and
performing signature confirmation on the digital key signature request and sending a digital key import request to the second device, or sending, after forwarding the digital key signature request to the first device and receiving a digital key import request from the first device, the digital key import request to the second device, for indicating the second device to save the generated second digital key.

18. The method of claim 16, wherein the digital key creation request further includes valid lifetime information, wherein the configuration information is further generated by the server based on the valid lifetime information, and wherein the digital key generated by the second device further includes the valid lifetime information.

19. The method of claim 16, wherein the digital key creation request further includes at least one of extended valid space information and extended valid lifetime information, wherein the configuration information is further generated by the server based on the at least one of the extended valid space information and the extended valid lifetime information, and the digital key generated by the second device further includes the at least one of the extended valid space information and the extended valid lifetime information.

20. The method of claim 19, wherein when a usage location of the digital key does not satisfy a space requirement corresponding to the valid space information, the extended valid space information is used to determine whether the usage location of the digital key satisfies a space requirement corresponding to the extended valid space information.

21. The method of claim 19, wherein when a usage location of the digital key satisfies a space requirement corresponding to the valid space information and usage time of the digital key does not satisfy a time requirement corresponding to the valid lifetime information, the extended valid lifetime information is used to determine whether the usage time of the digital key satisfies a time requirement corresponding to the extended valid lifetime information.

22. A computing device, comprising:
a processor; and
a memory having computer-readable instructions stored thereon that, when executed, cause the processor to perform the method of any of claims 1-21.
